# EUROPÄISCHE PATENTSCHRIFT

(11) **EP 1 475 553 B1**
(45) Veröffentlichungstag und Bekanntmachung des Hinweises auf die Patenterteilung: **05.03.2008**
(21) Anmeldenummer: 04006149.1
(22) Anmeldetag: 16.03.2004
(51) Int. Cl.: F16F 9/05

(54) **Luftfeder mit integriertem Druckanschlag**
Gas spring with integrated stop
Ressort à air comprenant une butée integrée

(30) Priorität: 08.05.2003 DE 10320502
(43) Veröffentlichungstag der Anmeldung: 10.11.2004
(73) Patentinhaber: Continental Aktiengesellschaft, 30165 Hannover (DE)
(72) Erfinder: Möritz, Matthias, 31535 Neustadt (DE); Oldenettel, Holger, 30900 Resse (DE)

(56) Entgegenhaltungen:
- DE-A- 10 020 765
- US-A- 4 555 096
- US-A- 5 690 319

## Beschreibung

Die Erfindung betrifft eine Luftfeder (z. B. als Teil eines Luftfederbeins) mit integriertem Druckanschlag - gemäß den Oberbegriffen der Ansprüche 1 und 2 - und ein Verfahren zu ihrer Herstellung - gemäß dem Oberbegriff des Anspruchs 6.

Ein integrierter Druckanschlag gehört heutzutage zur Standard-Ausstattung einer Luftfeder (siehe z. B. DE 198 34 092 A1, DE 199 59 839 A1 und DE 100 37 026 C1).
Bei solchen Luftfedern muss der als Druckanschlag (Zusatzfeder) dienende Gummipuffer in einem Topf gehalten werden. Dieser Topf ist üblicherweise an der Unterseite des Luftfederdeckels angeordnet.
Im Fall einer Schraubenfeder befindet sich der zur Aufnahme eines Gummipuffers dienende Topf an der Unterseite des Federtellers (siehe z. B. DE 197 19 301 A1).
Wie dieser Puffertopf an der Unterseite des Federtellers befestigt werden soll, wird dort nicht näher erläutert. Besteht der Luftfederdeckel bzw. der Federteller und der Puffertopf aus geprägtem Stahlblech, so erfolgt die Verbindung der beiden Teile üblicherweise durch einen Schweißvorgang.
Dabei kann nicht verhindert werden, dass der Oberflächenschutz der zusammenzufügenden Metallteile durch den Schweißvorgang beschädigt wird. Auch kann ein Schweißverzug nicht ausgeschlossen werden.

Gemäß DE 198 34 092 A1 bildet der Puffertopf mit dem Luftfederdeckel ein gemeinsames Druckgussteil. Die Figuren 4 und 7 der DE 199 59 839 A1 zeigen ebenfalls einen Druckguss-Luftfederdeckel mit integriertem Puffertopf.
Anstelle eines den Puffer oben und seitlich umgebenden Gehäuses kann der Anschlagpuffer freiliegend um eine geprägte Platte vulkanisiert sein (Fig. 1 bis 3 und 5, 6 der DE 199 59 839 A1).

Statt einen Luftfederdeckel mit integriertem Puffertopf (Zusatzfedertopf) als Druckgussteil aus Metall, z. B. Aluminium, herzustellen, schlägt die DE 100 37 026 C1 ein entsprechendes Spritzgießteil aus Kunststoff vor, dem Verstärkungsmaterialien, wie Glasfasern beigemengt werden können.

Die Druckschrift US5690319 offenbart eine Luftfeder mit einem integrierten Druckanschlag, wobei die Luftfeder im Wesentlichen aus einem Luftfederdeckel und einem daran mittels Spannringen druckdicht befestigten Luftfederbalg besteht. Der Druckanschlag setzt sich aus einem Topf und einem Anschlagpuffer zusammen. Der Luftfederdeckel ist aus Blech hergestellt, wobei im Bereich der Innenkontur des Luftfederdeckels, welche dem Luftfederinnenraum zugewandt ist, der Topf des Druckanschlages angeordnet ist.

### Aufgabe der Erfindung

Die Aufgabe der vorliegenden Erfindung besteht darin, eine kostengünstige Befestigung des Zusatzfedertopfes am Deckel einer Luftfeder darzustellen.

### Lösung und Vorteile

Sowohl der Luftfederdeckel als auch der Zusatzfedertopf sind aus geprägtem Blech, vorzugsweise aus Stahlblech, hergestellt. Diese Bauteile sind kostengünstig. Die Presssitz-Aufnahme des Zusatzfedertopfes in der hohlzylindrischen Ausnehmung des Deckels erfordert keine aufwendigen Montagearbeiten.

Der sichere Halt des Zusatzfedertopfes am Luftfederdeckel kann verbessert werden, wenn der hohlzylindrische Bereich des Deckels eine umlaufende Rille und der Topf einen nach außen geprägten Rand aufweist.

Der Umformprozess wird durch Verrollung realisiert. Zu diesem Zweck deformiert eine Anpressrolle das Material. Dabei wird gleichzeitig die Klemmkontur des Luftfederdeckels gerollt.
Alternativ erfolgt dieser Umformprozess beim Klemmen des Luftfederbalges.

Aufgrund des kostengünstigen Montageprozesses ergibt sich eine allgemeine Kostenreduzierung.
Eine Beschädigung des Oberflächenschutzes wird vermieden. Auch gibt es keinen Verzug, wie bei einer Schweißnaht üblich.
Stahlblech ist preiswert und erlaubt einen hohen Umformgrad und eine hohe Festigkeit.

### Zeichnungen

Ein Ausführungsbeispiel der Erfindung ist in den Zeichnungen dargestellt und in der nachfolgenden Beschreibung näher erläutert. Es zeigt:
Fig. 1 ein Luftfederbein vor der Befestigung eines Zusatzfedertopfes, ausschnittsweise, im Längsschnitt;
Fig. 2 ein Luftfederbein mit montiertem Zusatzfedertopf, rechte Hälfte, im Längsschnitt.

### Beschreibung

Ein Luftfederbein 2 setzt sich aus einer Luftfeder 4 und einem Dämpfer 6 zusammen. Die Luftfeder 4 besteht im Wesentlichen aus einem Luftfederdeckel 8, einem Abrollkolben 10 und einem dazwischen mittels Spannringen 12a, 12b druckdicht befestigten Luftfederbalg 14. Auf der Längsachse 16 der Luftfeder 4 ist der Dämpfer 6 angeordnet, der eine Dämpferstange 18 und ein Dämpferrohr 20 aufweist, wobei die Dämpferstange 18 kraftschlüssig mit dem Luftfederdeckel 8 und das Dämpferrohr 20 mit dem Abrollkolben 10 verbunden ist.

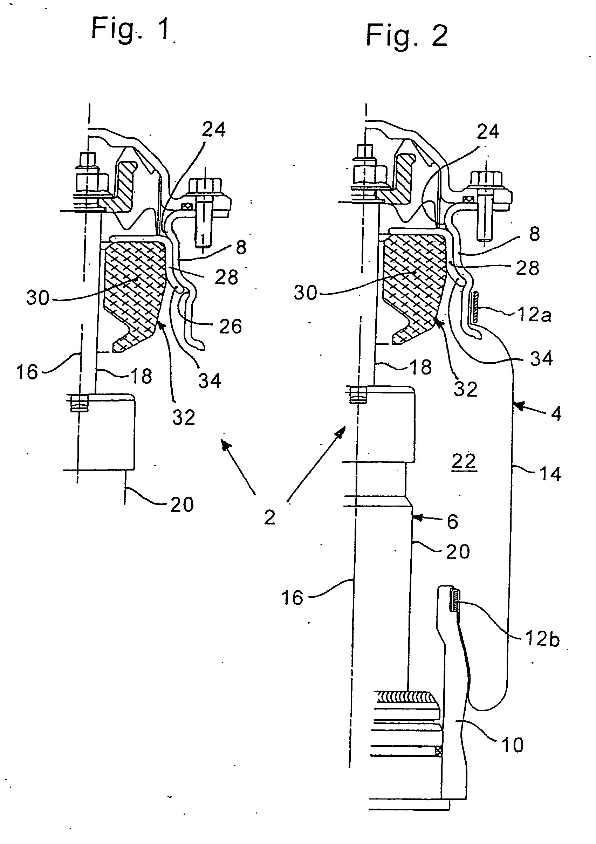

Der aus Blech hergestellte Luftfederdeckel 8 weist an seiner dem Luftfederinnenraum 22 zugewandten Seite eine hohlzylindrische Geometrie mit Anlage 24 und umlaufender Rille 26 auf - zur Aufnahme einer als Druckanschlag dienenden, aus Zusatzfedertopf 28 und Gummipuffer (allgemein: Anschlagpuffer) 30 bestehenden Zusatzfeder 32.
Durch eine Verringerung des Durchmessers der hohlzylindrischen Geometrie im Luftfederdeckel 8 wird ein nach außen ragender Rand 34 des Topfes 28 in der Rille 26 verspannt (Fig. 1: vor der Verspannung; Fig. 2: nach der Verspannung).

Der Umformprozess kann als Verrollung ausgeführt werden, wobei eine umlaufende Anpressrolle das Material deformiert. Bei diesem Vorgang kann gleichzeitig die Klemmkontur des Luftfederdeckels 8 gerollt werden.
Bei dem in den Abbildungen dargestellten Ausführungsbeispiel sind die sich gegenüberstehenden Formen von Luftfederdeckel 8 und Zusatzfedertopf 28 so ausgebildet, dass beim Klemmen des Luftfederbalgs 14 (Spannring 12a) gleichzeitig der Umformprozess erfolgt, so dass ein separater Verrollungsvorgang zur Verspannung des Zusatzfedertopfes am Luftfederdeckel 8 entfallen kann.

### Bezugszeichenliste

- 2: Luftfederbein
- 4: Luftfeder
- 6: Dämpfer
- 8: Luftfederdeckel
- 10: Abrollkolben
- 12a, 12b: Spannring
- 14: Luftfederbalg
- 16: Längsachse
- 18: Dämpferstange
- 20: Dämpferrohr
- 22: Luftfederinnenraum
- 24: Anlage
- 26: Rille
- 28: Zusatzfedertopf, Topf
- 30: Gummipuffer, Anschlagpuffer
- 32: Zusatzfeder 28, 30
- 34: Rand

## Patentansprüche

1. Luftfeder (4) mit integriertem Druckanschlag,
wobei die Luftfeder (4) im Wesentlichen aus einem Luftfederdeckel (8), einem Abrollkolben (10) und einem dazwischen mittels Spannringen (12a, 12b) druckdicht befestigten Luftfederbalg (14) besteht, und
wobei der darin integrierte Druckanschlag von einem von einem Zusatzfedertopf (28) umfassten Anschlagpuffer (30) gebildet wird,
**wobei** der aus Blech hergestellte Luftfederdeckel (8) an seiner dem Luftfederinnenraum (22) zugewandten Seite eine hohlzylindrische Geometrie aufweist,
wobei der Durchmesser der hohlzylindrischen Geometrie des Luftfederdeckels (8) geringfügig größer ist als der Durchmesser des Zusatztopfes (28),
**dadurch gekennzeichnet, dass**
der hohlzylindrische Bereich eine umlaufende Rille (26) aufweist, - zur Aufnahme einer nach außen geprägten Randes (34) des Topfes (28).

2. Luftfeder nach dem Oberbegriff des Anspruchs 1,
**dadurch gekennzeichnet,**
**dass** der aus Blech hergestellte Luftfederdeckel (8) an seiner dem Luftfederinnenraum (22) zugewandten Seite eine hohlzylindrische Geometrie mit Anlage (24) zur Presssitz-Aufnahme des Zusatzfedertopfes (28) aufweist.

3. Luftfeder nach einem der Ansprüche 1 bis **2,**
**dadurch gekennzeichnet,**
**dass** der Luftfederdeckel (8) und/oder der Zusatzfedertopf (28) aus Stahlblech besteht.

4. Luftfeder nach einem der Ansprüche 1 bis 4- 3,
**dadurch gekennzeichnet,**
**dass** die Luftfeder (4) Teil eines Federbeins (2) mit integriertem Dämpfer (6) ist.

5. Verfahren zur Herstellung einer Luftfeder mit integriertem Druckanschlag nach einem der Ansprüche 1 bis **4,**
**dadurch gekennzeichnet,**
**dass** der Zusatzfedertopf (28) durch Verringerung des zylindrischen Bereichs des Luftfederdeckels (8) und/oder des Außenrandes seiner Rille (26) verspannt wird.

6. Verfahren nach Anspruch 5,
**dadurch gekennzeichnet,**
**dass** der Umformungsprozess durch Verrollung durchgeführt wird,
wobei eine umlaufende Anpressrolle das Material deformiert.

7. Verfahren nach Anspruch **6,**
**dadurch gekennzeichnet,**
**dass** der Umformprozess zur Befestigung des Zusatzfedertopfes (28) gleichzeitig mit der Verrollung der Klemmkontur des Luftfederdeckels (8) erfolgt.

8. Verfahren nach Anspruch **5** oder **6,**
**dadurch gekennzeichnet,**
**dass** der Umformprozess zur Befestigung des Zusatzfedertopfes (28) am Luftfederdeckel (8) durch Klemmen des Luftfederbalgs (12) erfolgt.

9. Verwendung des Verfahrens nach einem der Ansprüche **5** bis **7** zur Befestigung eines Zusatzfedertopfes (28) an dem Federteller einer Schraubenfeder.

## Claims

1. Air spring (4) with integrated compression stop,
wherein the air spring (4) is composed essentially of an air spring cover (8), a rolling piston (10) and an air spring bellows (14) which is mounted in a pressure-tight fashion between them by means of clamping rings (12a, 12b), and
wherein the compression stop which is integrated therein is formed by a stop buffer (30) which is surrounded by an additional spring pot (28),
wherein the air spring cover (8) which is manufactured from sheet metal has a hollow-cylindrical geometry on its side facing the interior (22) of the air spring, wherein the diameter of the hollow-cylindrical geometry of the air spring cover (8) is slightly larger than the diameter of the additional pot (28), **characterized in that** the hollow-cylindrical area has a circumferential groove (26) for holding an outwardly stamped edge (34) of the pot (28).

2. Air spring according to the preamble of Claim 1, **characterized in that** the air spring cover (8) which is manufactured from sheet metal has, on its side facing the interior (22) of the air spring, a hollow-cylindrical geometry with an abutment (24) to hold the additional spring pot (28) in a form-fitting fashion.

3. Air spring according to one of Claims 1 to 2, **characterized in that** the air spring cover (8) and/or the additional spring pot (28) are composed of sheet steel.

4. Air spring according to one of Claims 1 to 3, **characterized in that** the air spring (4) is part of a Macpherson (2) with an integrated shock absorber (6).

5. Method for manufacturing an air spring with integrated compressive stop according to one of Claims 1 to 4, **characterized in that** the additional spring pot (28) is clamped by reducing the cylindrical area of the air spring cover (8) and/or the outer edge of its groove (26).

6. Method according to Claim 5, **characterized in that** the shaping process is carried out by rolling,
wherein a circumferential pressing roller deforms the material.

7. Method according to Claim 6, **characterized in that** the shaping process for attaching the additional spring pot (28) is carried out at the same time as the rolling of the clamping contour of the air spring cover (8).

8. Method according to Claim 5 or 6, **characterized in that** the shaping process for attaching the additional spring pot (28) to the air spring cover (8) is carried out by clamping the air spring bellows (12).

9. Use of the method according to one of Claims 5 to 7 for attaching an additional spring pot (28) to the spring plate of a helical spring.

## Revendications

1. Ressort à air (4) comprenant une butée de pression intégrée,
le ressort à air (4) se composant essentiellement d'un couvercle de ressort à air (8), d'un piston de déroulage (10) et d'un soufflet de ressort à air (14) fixé entre eux au moyen de bagues de serrage (12a, 12b), de manière étanche à la pression, et
dans lequel la butée de pression intégrée est formée par un tampon de butée (30) entouré par un pot de ressort supplémentaire (28),
dans lequel le couvercle de ressort à air (8) fabriqué en tôle, présente, sur son côté tourné vers l'espace interne du ressort à air (22), une géométrie cylindrique creuse, et
dans lequel le diamètre de la géométrie cylindrique creuse du couvercle du ressort à air (8) est légèrement plus grand que le diamètre du pot supplémentaire (28),
**caractérisé en ce que**
la région cylindrique creuse présente une gorge périphérique (26), pour recevoir un bord (34) du pot (28) matricé vers l'extérieur.

2. Ressort à air selon le préambule de la revendication 1,
**caractérisé en ce que**
le couvercle du ressort à air (8) fabriqué en tôle présente, sur son côté tourné vers l'espace interne du ressort à air (22), une géométrie cylindrique creuse avec un appui (24) pour recevoir le pot de ressort supplémentaire (28) par ajustement serré.

3. Ressort à air selon l'une quelconque des revendications 1 à 2,
**caractérisé en ce que**
le couvercle du ressort à air (8) et/ou le pot du ressort supplémentaire (28) est réalisé en tôle d'acier.

4. Ressort à air selon l'une quelconque des revendications 1 à 3,
**caractérisé en ce que**
le ressort à air (4) fait partie d'une jambe de force (2) avec amortisseur (6) intégré.

5. Procédé de fabrication d'un ressort à air avec butée de pression intégrée selon l'une quelconque des revendications 1 à 4,
**caractérisé en ce que**
le pot de ressort supplémentaire (28) est serré par réduction de la région cylindrique du couvercle du ressort à air (8) et/ou du bord extérieur de sa gorge (26).

6. Procédé selon la revendication 5,
**caractérisé en ce que**
le processus de mise en forme est effectué par roulage, un rouleau de pressage en rotation déformant le matériau.

7. Procédé selon la revendication 6,
**caractérisé en ce que**
le processus de mise en forme pour la fixation du pot de ressort supplémentaire (28) s'effectue simultanément au roulage du contour de serrage du couvercle du ressort à air (8).

8. Procédé selon la revendication 5 ou 6,
**caractérisé en ce que**
le processus de mise en forme pour la fixation du pot de ressort supplémentaire (28) sur le couvercle du ressort à air (8) s'effectue par serrage du soufflet de ressort à air (12).

9. Utilisation du procédé selon l'une quelconque des revendications 5 à 7 pour fixer un pot de ressort supplémentaire (28) sur la coupelle de ressort d'un ressort à boudin.
